# EUROPEAN PATENT SPECIFICATION

(11) **EP 3 910 183 B1**
(45) Date of publication and mention of the grant of the patent: **25.06.2025**
(21) Application number: 20211964.0
(22) Date of filing: 04.12.2020
(51) Int. Cl.: F02D 41/04, F02M 63/02, F02D 41/22, F02D 11/02, F02D 17/04, A01D 34/82, A01D 34/64

(54) **ENGINE EMERGENCY STOP DEVICE OF A WORK VEHICLE**
MOTOR-NOTSTOPPVORRICHTUNG FÜR EIN ARBEITSFAHRZEUG
DISPOSITIF D'ARRÊT D'URGENCE DE MOTEUR D'UN VÉHICULE DE TRAVAIL

(30) Priority: 13.05.2020 JP 2020084502
(43) Date of publication of application: 17.11.2021
(73) Proprietor: Kubota Corporation, Osaka-shi, Osaka 556-8601 (JP)
(72) Inventor: ODAGIRI, Makoto, SAKAI-SHI, OSAKA, 5900823 (JP); YAMAMOTO, Tomohisa, SAKAI-SHI, OSAKA, 5900823 (JP); YAMASHITA, Nobuyuki, SAKAI-SHI, OSAKA, 5900823 (JP); TASHIMA, Shinya, SAKAI-SHI, OSAKA, 5900823 (JP)
(74) Representative: Cabinet Beau de Loménie

(56) References cited:
- EP-A1- 3 061 955
- EP-B1- 3 061 955
- GB-A- 2 084 660
- JP-A- 2000 170 583
- JP-A- S57 143 141
- JP-U- S54 173 141
- US-A1- 2013 184 962

## Description

### Technical Field

The present invention relates to an engine emergency stop device of a work vehicle configured such that an emergency stop of an engine is possible via a stop operational mechanism configured to communicate a stop command provided by a stop command operational tool provided separately of a key switch and outside a hood to an engine stop lever separately of the key switch.

### Background Art

As an engine emergency stop device of a work vehicle configured such that an emergency stop of the engine is possible by an operation of a stop command operational tool provided separately of a key switch and outside a hood, conventionally, there is a technique as follows.

Namely, separately of an electric stop operational system using a stopping motor operable based on an operation on a key switch, a manual stop operational system is employed to manually operate an engine stop tool to stop fuel supply from a fuel injection pump, thus stopping the engine (see Patent Document 1 for example).

### Prior Art Document

### Patent Document

Patent Document 1: Japanese Utility Model Application Publication No. Hei. 2-110238.

The documents JP S54 173141 U and GB 2 084 660 A disclose respectively the preamble of independent claim 1.

### Disclosure of the Invention

### Problems to be Solved by the Invention

In the engine emergency stop device of the work vehicle disclosed in Patent Document 1, as described above, there is provided an engine stop tool for controlling feeding/discharging of fuel to/from the fuel injection pump. And, this engine stop tool is operably interlocked with the electric stop operational system using the stopping motor and a manual stop operational system using a stop operational mechanism so that it is possible to pivotally operate a stop lever to control feeding/discharging of fuel not only by the key switch, but also by a manual stop command operational tool provided separately of the key switch.

Therefore, for instance, even when stop is not possible by the key switch due to shortage in the voltage of a battery, the engine can yet be stopped by a manual operation. In this respect, the arrangement is advantageous.

On the other hand, in case there occurs a significant change inside the hood in the disposing position of the fuel injection pump or the engine stop tool due to a specification (design) change made in the engine, the stop operational mechanism used prior to such design change becomes no longer usable as it is, but there arises a need to re-design the stop operational mechanism in accordance with the change occurring in the position of the engine stop tool.

The present invention is intended to utilize an engine emergency stop device having a stop operational mechanism commonly usable for various machine types differing in the disposing position or operational direction of a stop lever for engine stop which is disposed inside a hood.

### SOLUTION

One aspect of the present invention is defined in claim 1. An engine emergency stop device of a work vehicle comprises:
a stop lever provided inside a hood and switchable between an operational position for allowing an operation of the engine and an operation stopping position for stopping an operation of the engine;
an operational device configured to automatically operate the stop lever to the operation stopping position in response to an operation of a key switch to an OFF position;
a stop command operational tool provided separately of the key switch and outside the hood; and
a stop operational mechanism configured to communicate a stop command by the stop command operational tool to the stop lever separately of the operational device;
wherein the stop operational mechanism includes a starting end operational portion for transmitting an operational force along an operational direction of the stop command operational tool, a terminal end operational portion for transmitting the operational force of the stop command operational tool along an operational direction of the stop lever, and an intermediate connecting portion connecting the starting end operational portion with the terminal end operational portion; and
wherein the intermediate connecting portion is configured to compensate for an error between the starting end operational portion and the terminal end operational portion in the operational direction or the operational position to operate the terminal end operational portion toward the engine stopping side in association with an operation of the starting end operational portion toward the engine stopping side.

With the present invention described above, separately of the key switch, a stop command operational tool provided outside the hood is connected to the stop lever via the stop operational mechanism. This stop operational mechanism includes a starting end operational portion for transmitting an operational force along an operational direction of the stop command operational tool, a terminal end operational portion for transmitting the operational force of the stop command operational tool along an operational direction of the stop lever, and an intermediate connecting portion connecting the starting end operational portion with the terminal end operational portion. Therefore, even when an engine stop is not possible by the key switch, the engine stop is made still possible by a manual operation by manually operating the stop command operational tool.

And, the intermediate connecting portion compensates for an error between the starting end operational portion and the terminal end operational portion in the operational direction or the operational position to operate the terminal end operational portion toward the engine stopping side in association with an operation of the starting end operational portion toward the engine stopping side. Therefore, with appropriate adjustment at the intermediate connecting portion of an amount of error present in the operational direction or the operational position, the stop lever at the corresponding position can be manually operated toward the engine stopping side.

In the above-described arrangement, preferably, the intermediate connecting portion is provided at a plurality of portions in the stop operational mechanism.

With the above-described inventive arrangement, as the intermediate connecting portion is provided at a plurality of portions, there is obtained greater degree of freedom in setting the operational directions or the disposing positions of the starting end operational portion and the terminal end operational portion. With this, with favorable and good correspondence with the stop lever at a plurality of portions which may be provided at different disposing positions or operational directions, the stop lever can be manually operated toward the engine stopping side.

In the above-described arrangement, preferably, the stop operational mechanism is configured such that a part of the intermediate connecting portion is detachable.

With the above-described inventive arrangement, attachment is possible also with a part of the intermediate connecting portion being omitted. With this, use is made possible with weight-reduced arrangement with a non-used part of the stop operational mechanism being eliminated.

In the above-described arrangement:
the hood includes a lower hood fixed to a machine body frame and forming a lower space inside the hood and an upper hood forming an upper space inside the hood and upwardly of the lower hood; and
between an upper edge of the lower hood and a lower edge of the upper hood, there is formed an opening portion at which a portion of the stop operational mechanism extending from the outer side to the inner side of the hood is located to allow movement of the starting end operational portion in its operational direction.

With the above-described inventive arrangement, the engine emergency stop device can be disposed with inserting a part of the stop operational mechanism extending from the outer side to the inner side of the hood at the opening portion formed between the upper edge of the lower hood and the lower edge of the upper hood.

With the above, it is possible to dispose the engine emergency stop device at a position not to interfere with an opening/closing operation of the hood. And, at the time of inspection or an assembly/disassembly operation of the engine emergency stop device, such operation can be carried out easily only by opening/closing the hood.

In the above-described arrangement, preferably:
a step deck is provided on the machine body frame;
at a front end portion on the step deck, an operational knob as the stop command operational tool is supported; and
the stop lever is operated toward the engine stopping side by an operation of the operational knob in a pulling direction.

With the above-described inventive arrangement, an operational knob as the stop command operational tool is provided at the front end portion on the step deck. Therefore, the operational knob can be disposed near the hood at a position hardly interfering with the driver who is located on the step deck. Further, the operational knob is disposed at a position that can be relatively easily operated by the driver who has gotten off and located on the ground surface.

And, with the above-described inventive arrangement, the stop lever is operated toward the engine stopping side not by a pushing operation, but by a pulling operation of the operational knob. Even if a foot of the driver located on the step deck comes into contact with the operational knob, this foot contact is a pushing operation of the operational knob, not its pulling operation. Therefore, it is readily possible to avoid inadvertent engine stop operation.

In the above-described arrangement, preferably:
a fender mirror is attached to the front end portion of the step deck; and
the operational knob is supported to an attachment metal tool of the fender mirror.

With the above-described inventive arrangement, an attachment metal tool for the fender mirror can be used as a support metal tool for the operational knob. With this, even further simplification of the arrangement is made possible.

### Brief Description of the Drawings

Fig. 1 is a side view showing an engine section of a riding mower,
Fig. 2 is a plan view showing the engine section of the riding mower,
Fig. 3 is a side view showing an engine emergency stop device,
Fig. 4 is a plan view showing the engine emergency stop device,
Fig. 5 is an exploded perspective view showing the engine emergency stop device, and
Fig. 6 is a side view showing a further mode of use of the engine emergency stop device.

### Embodiment

Next, an embodiment of the present invention will be explained with reference to the accompanying drawings.

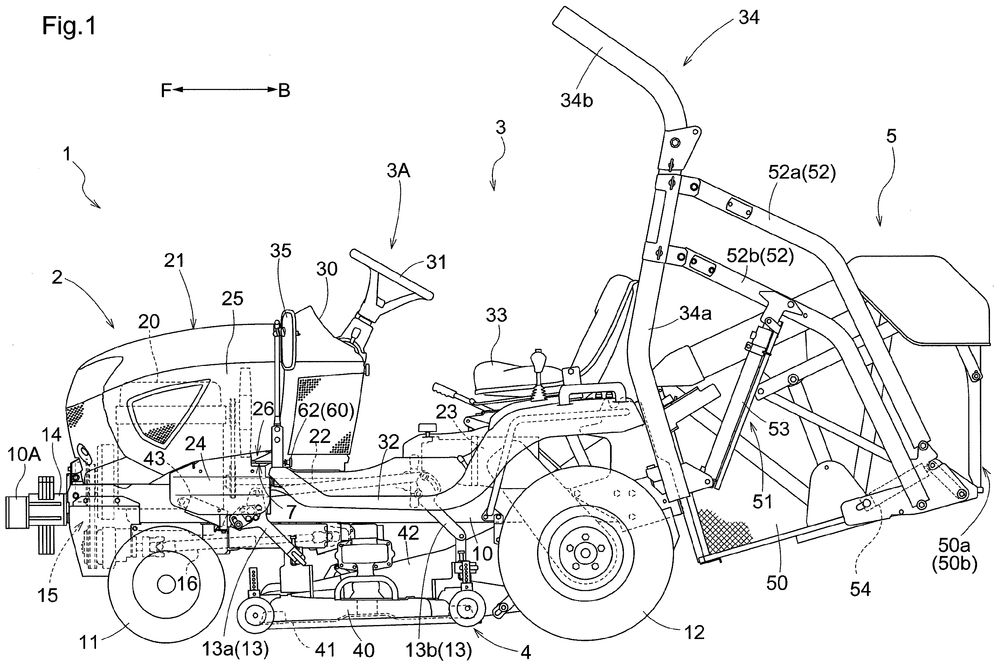

Incidentally, the front/rear direction and the left/right direction in the explanation of the instant embodiment are defined as follows, unless explicitly indicated otherwise. Namely, the advancing direction on the forward traveling side during work travel of the engine emergency stop device of the work vehicle to which the present invention is applied (see arrow F in Fig. 1) will be defined as "front", the advancing direction to the reverse traveling side (see arrow B in Fig. 1) will be defined as "rear", the direction corresponding to the right side relative to the forwardly oriented posture in the front/rear direction will be defined as "right" and the direction corresponding to the left side similarly will be defined as "left", respectively.

### [General Configuration of Riding Mower]

Fig.1 shows an overall side view of a riding mower as an example of a "work vehicle". In this riding mower, on the front side of a machine body frame 10 of a traveling machine body 1, there are provided a pair of left and right steerable front wheels 11, 11 and on the rear side, there are provided a pair of left and right drivable rear wheels 12, 12, thus enabling a self-propelled traveling.

Under the machine body frame 10 and between the front wheels 11 and the rear wheels 12 in the front/rear direction, there is mounted a rear discharge type mower device 4 under a liftable suspended state. And, on the rear side of this traveling machine body 1, there is provided a grass collecting device 5 for collecting cut grass pieces mowed by the mower device 4.

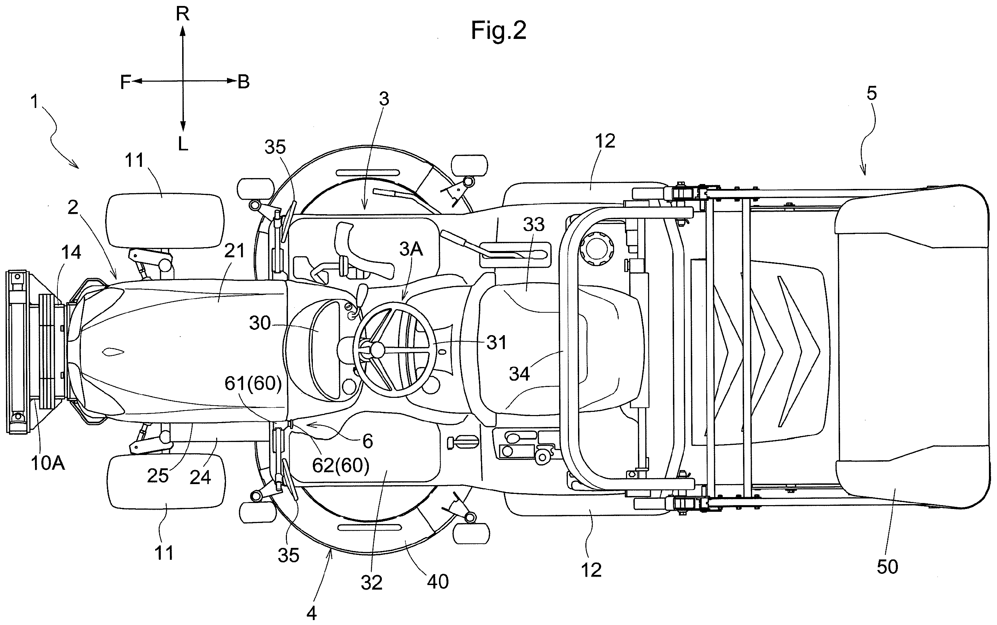

As shown in Fig. 1 and Fig. 2, on the machine body frame 10 of the traveling machine body 1, an engine section 2 is provided at a front portion thereof and a riding driving section 3 is provided rearwardly of the engine section 2.

In the engine section 2, an engine 20 as being accommodated in a hood 21, is mounted on the machine body frame 10. Power taken off from the rear side of the engine 20 is inputted via a main transmission shaft 22 to a transmission case 23 disposed at a rear position. Power speed-changed in the transmission case 23 is outputted to the rear wheels 12, etc.

In the riding driving section 3 rearwardly of the engine section 2, a maneuvering section 3A is provided. This maneuvering section 3A includes a maneuvering panel 30 continuous with the rear side of the hood 21, a steering wheel 31, etc. And, on the rear side of the maneuvering section 3A, a driver's seat 33 is disposed on the upper side of a step deck 32 located at the driver's foot. At a rear portion of this driver's seat 33, a ROPS 34 is mounted vertically.

The ROPS 34 has a portal shape as seen in a front view and to a pair of left and right ROPS bases (not shown) provided integrally at the rear end portion of the machine body frame 10, lower end sides of pillar like leg portions 34a, 34b on the left and right opposed sides are fixedly coupled. The upper end sides of the left and right pillar-like leg portions 34a, 34a are connected to each other via an upper frame 34b of the portal shape. The upper frame 34b is provided to cover the upper side of the driver's seat 33.

From the front side of the engine 20, power for utility work can be taken off. Namely, on the front side of the engine 20, there is provided a PTO mechanism 15 constituted of a belt transmission mechanism. Via a PTO shaft 16 included in this PTO mechanism 15, the power of the engine 20 is transmitted to the mower device 4.

At a front portion of the machine body frame 10, there is provided a guard frame 10A acting as a protective member for the machine body front portion.

This guard frame 10A includes a balance weight attachment portion 14 to which a plurality of balance weights can be attached.

### [Engine Section]

The hood 21 provided in the engine section 2 includes a lower hood 24 and an upper hood 25. The lower hood 24 is fixed to the machine body frame 10 to form a lower space inside the hood 21. The upper hood 25 forms an upper space inside the hood 21 upwardly of the lower hood 24. Between a rear end portion of an upper edge 24a of the lower hood 24 and a rear end portion of a lower edge 25a of the upper hood 25, an opening portion 26 is formed.

In this opening portion 26, a part of a stop operational mechanism 7 (to be described later) extending from the outside to the inside of the hood 21 is provided as being inserted through this opening portion 26.

The engine 20 is a diesel engine and includes a fuel injection pump 27 as a fuel supplying device for supplying fuel to the inner chamber of the cylinder. The fuel injection pump 27 includes a stop lever 28. This stop lever 28 can be switchable in its position between an operational position P1 for allowing supply of fuel from the fuel injection pump 27 to the engine 20 and a stop position P2 for stopping operation of the engine 20 by stopping fuel supply from the fuel injection pump 27 to the engine 20.

To the stop lever 28, there is connected a stop solenoid 29 acting as an operational device operable in response to an operational command from a key switch (not show) provided in the maneuvering section 3A. The stop lever 28 is configured to be operable between the operational position P1 and the stop position P2 so that starting of the engine 20 and operation stopping of the engine 20 may be effected by an operation of the stop solenoid 29.

Further, the stop lever 28 is connected also to an engine emergency stop device 6 to be described later. The stop lever 28 is configured to be operable between the operational position P1 and the stop position P2 in association with a manual operation by the engine emergency stop device 6.

### [Mower Device]

The mower device 4 includes a housing 40. The housing 40 is supported in suspension to the machine body frame 10 to be liftable up/down via a link mechanism 13 having a pair of front link 13a and rear link 13b on the left and right opposed sides respectively.

Of the link mechanism 13, to the upper end portion of the front link 13a, a mower lift cylinder 43 is coupled. In association with expanding/contracting motion of this mower lift cylinder 43, a vertical height position of the housing 40 relative to the machine body frame 10 can be changed.

Inside the housing 40, there are disposed a pair of left and right rotary blades 41, 41. Each rotary blade 41 is rotatable about a vertical axis. The respective rotary blades 41 will be driven to rotate at an equal speed with portions of their rotary paths being overlapped with each other. The rotational drive directions of the pair of left and right rotary blades 41 are as follows. Namely, the rotational direction of the left rotary blade 41 is clockwise as seen in the plan view. The rotational direction of the right rotary blade 41 is counterclockwise as seen in the plan view. As the rotary blades 41, 41 are rotatably driven in this way, a mowing work of grass or the like is carried out and also by a conveying wind generated in association with the rotary motions, cut grass pieces will be discharged rearwards via a discharge opening formed at a rear portion of the housing 40.

### [Grass Collecting Device]

As shown in Fig. 1 and Fig. 2, the grass collecting device 5 includes a grass collecting container 50 and a lift drive mechanism 51. The grass collecting container 50 stores cut grass pieces. The lift drive mechanism 51 operates to allow a lifting operation and a cut grass discharging operation of the grass collecting container 50 relative to the traveling machine body.

The grass collecting container 50 includes, on its front end side, a receiving opening (not shown) for receiving cut grass pieces supplied thereto via a conveying duct 42 from the mower device 4 side. The grass collecting container 50 includes, on the rear end side thereof, a discharge exit 50a for discharging and an opening/closing lid 50b which covers the discharge exit 50a.

The lift drive mechanism 51 includes a lift link 52, a lift cylinder 53 (corresponding to a "hydraulic actuator") and a dump cylinder 54 (corresponding to a "hydraulic actuator"). The lift link 52 operably couples the grass collecting container 50 to the ROPS 34 provided on the rear side of the traveling machine body 1. The lift cylinder 53 lifts the lift link 52 up/down relative to the ROPS 34. The dump cylinder 54 is provided for changing the posture of the grass collecting container 50 relative to the lift link 52 from a state of a nearly horizontal collecting posture to a rearwardly lowered rear inclined posture to open/close the opening/closing lid 50b of the grass collecting container 50.

The lift link 52 includes a pair of left and right upper links 52a and a pair of left and right lower links 52b. The front end side of each upper link 52a and the front end side of each lower link 52b are detachably coupled to an upper portion of the ROPS 34. The rear end side of each upper link 52a and the rear end side of each lower link 52b are coupled to a lower portion adjacent the rear end side of the grass collecting container 50. And, the upper end portion of the lift cylinder 53 constituted of a hydraulic cylinder is coupled to the lower link 52b. In association with an expanding/contacting motion of the lift cylinder 53, the lift link 52 is pivoted to carry out a lifting up/down operation of the grass collecting container 50.

### [Engine Emergency Stop Device]

As shown in Figs. 1 through 5, there is provided the engine emergency stop device 6 for stopping the engine 20 inside the hood 21 by a manual operation. This engine emergency stop device 6 is provided for stopping an operation of the engine 20 by a manual operation, separately or independently of operations of starting/stopping the engine 20 by means of the stop solenoid 29 which is operated in response to a command from the key switch (not shown) provided in the maneuvering section 3A.

The engine emergency stop device 6 is provided at the front end portion of the step deck 32 which is outside the hood 21. The engine emergency stop device 6 includes a stop command operational tool 60 which is manually operable and a stop operational mechanism 7. The stop operational mechanism 7 is configured to communicate a stop command manually provided by the stop command operational tool 60 to the stop lever 28, independently of the stop solenoid 29 as an operational device.

The disposing position of this stop command operational tool 60 on the step deck 32 is such a position that can be gripped by a driver located at the riding driving section 3 by extending his/her hand from the driver's seat 33 downwardly and forwardly and that also can be gripped and operated from the lateral side of the machine body by a driver who has got off the step deck 32 and stands on the ground.

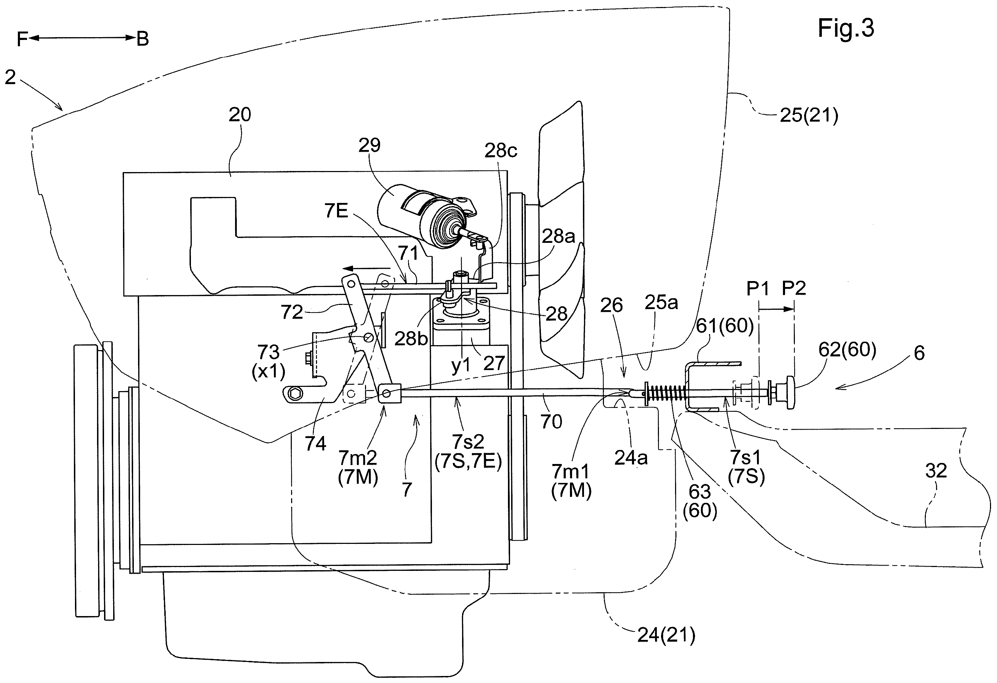

The stop operational mechanism 7, as shown in Figs. 3 through 5, includes a starting end operational portion 7S, a terminal end operational portion 7E and an intermediate connecting portion 7M. The starting end operational portion 7S transmits an operational force along an operational direction of the stop command operational tool 60. The terminal end operational portion 7E transmits the operational force of the stop command operational tool 60 along an operational direction of the stop lever 28. The intermediate connecting portion 7M connects the starting end operational portion 7S with the terminal end operational portion 7E.

As shown in Figs. 3 through 5, the stop command operational tool 60 includes an attachment bracket 61 (corresponding to an "attachment metal tool") fixed to an upper face front end portion of the step deck 32, an operational knob 62 and a return urging spring 63.

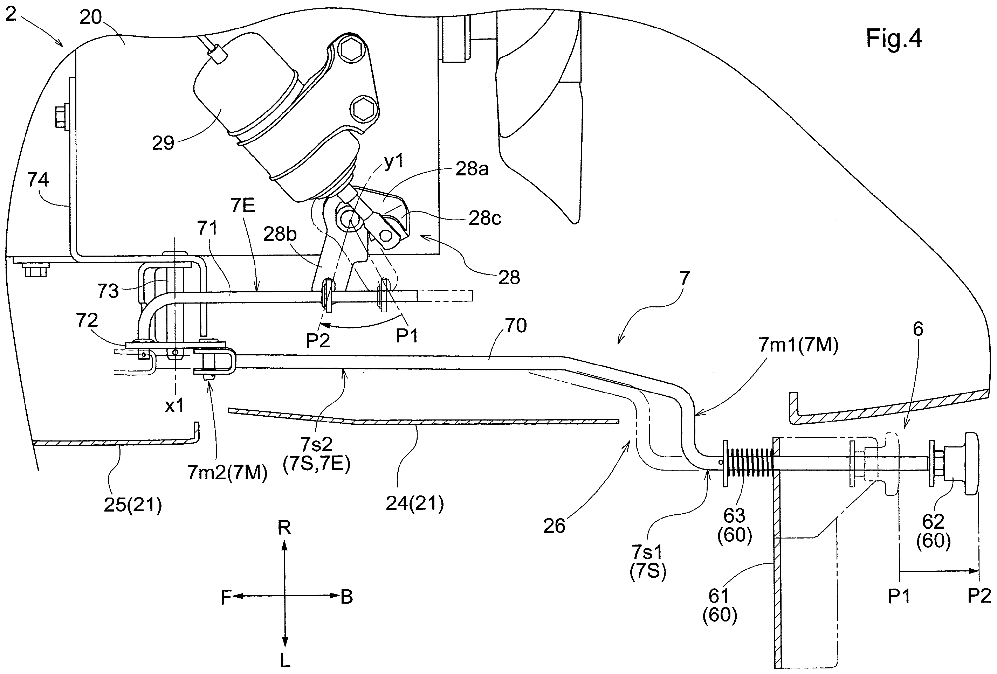

An interlocking arrangement is provided such that the stop lever 28 is located at the operational position P1 when the operational knob 62 is under its free state. And, when the operational knob 62 under the free state is gripped and pulled rearwards, a first rod 70 as the starting end operational portion 7S can be pulled toward the rear side. As shown in Fig. 3 and Fig. 4, when the operational knob 62 has been pulled out to the position corresponding to the stop position P2 of the stop lever 28, fuel supply from the fuel injection pump 27 to the engine 20 is stopped, whereby the operation of the engine 20 is stopped.

The attachment bracket 61 is used also as an attachment metal tool for vertically mounting a fender mirror 35 to the front end portion of the upper face of the step deck 32.

The constituent members of the stop operational mechanism 7 include the first rod 70, a second rod 71 and a pivot link member 72. One end side (rear end side) of the first rod 70 is connected to the operational knob 62. The other end side (front end side) of the first rod 70 is connected to the lower end portion of the pivot link member 72. One end side (rear end side) of the second rod 71 is connected to the stop lever 28 and the other end side (front end side) of the second rod 71 is connected to the upper end portion of the pivot link member 72. The pivot link member 72 connects the first rod 70 with the second rod 71.

As shown in Fig. 4, a longitudinally intermediate portion of the first rod 70 is bent in the form of a crank and the more rear side than the bent portion in the first rod 70 is a first starting end operational portion 7s1 as the starting end operational portion 7S. The more front side than the bent portion in the first rod 70 is a second starting end operational portion 7s2 as the starting end operational portion 7S. And, in the bent portion bridging between the first starting end operational portion 7s1 and the second starting end operational portion 7s2, there is provided a first intermediate connecting portion 7m1 as the intermediate connecting portion 7M along the left/right direction. This first intermediate connecting portion 7m1 is present at the position that can extend through the opening portion 26 of the hood 21. Therefore, the first starting end operational portion 7s1 will be located outside the hood 21 and the second starting end operational portion 7s2 is located inside the hood 21.

As shown in Fig. 4, the front end portion of the second rod 71 as the terminal end operational portion 7E is connected to the upper end portion of the pivot link member 72. The rear end portion of the second rod 71 is connected to the stop lever 28.

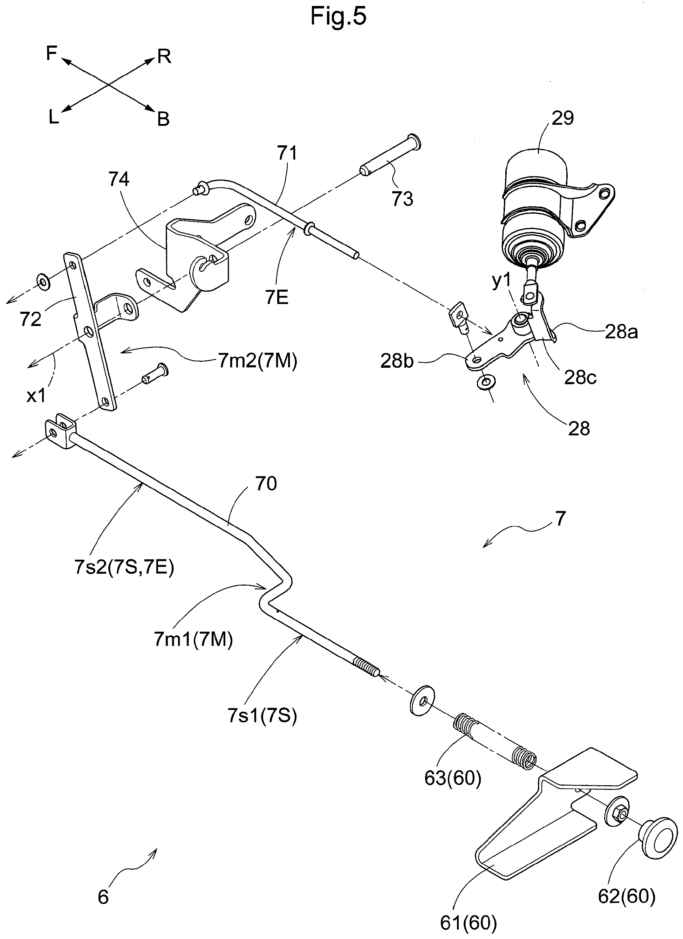

The stop lever 28 is constituted of a bell-crank like member attached to be rotatable about a vertical axis y1 at the main body upper position of the engine 20 (see Fig. 4 and Fig. 5).

This stop lever 28 includes extension portions 28a, 28b. The extension portions 28a, 28b extend in two directions along the horizontal direction as branching in bifurcation from the vicinity of the portion where the vertical axis y1 is present. And, from an end portion of one extension portion 28a of these extension portions 28a, 28b, there is formed a rising protrusion piece portion 28c. To the upper end of this protrusion piece portion 28c, the stop solenoid 29 is connected. And, to an end portion of the other extension portion 28b of the extension portions 28a, 28b, a rear end portion of the second rod 71 is connected.

In the pivot link member 72 as the second intermediate connecting portion 7m2 in the intermediate connecting portion 7M, the lower end portion thereof is coupled to the front end portion of the first rod 70. The upper end portion of the pivot link member 72 is coupled to the front end portion of the second rod 71. And, a vertically intermediate portion of the pivot link member 72 is supported by a horizontal support shaft 73. This horizontal support shaft 73 protrudes to the left laterally outer side from an attachment member 74 attached to the lateral portion of the main body of the engine 20. The pivot link member 72 is supported to be pivotable to the front/rear sides about a horizontal axis x1 of this horizontal support shaft 73.

Of the intermediate connecting portion 7M, the first intermediate connecting portion 7m1 couples the first starting end operational portion 7s1 with the second starting end operational portion 7s2 so as to compensate for an error in the position in the left/right direction between the first starting end operational portion 7s1 and the second starting end operational portion 7s2. The first starting end operational portion 7s1 transmits the operational force along the operational direction of the operational knob 62 located outside the hood 21. The second starting end operational portion 7s2 moves, at the position inside the hood 21, along the operational direction of the operational knob 62.

Of the intermediate connecting portion 7M, the second intermediate connecting portion 7m2 compensates for an error in the operational positions in the left/right direction and in the vertical direction, between the first starting end operational portion 7s1 as the starting end operational portion 7S for transmitting the operational force along the operational direction of the operational knob 62 and the second rod 71 as the terminal end operational portion 7E and compensates also for an error in the operational directions of the first rod 70 and the second rod 71 whose moving directions are in reverse.

### [Further Mode of Use]

Unlike the above-described arrangement in which as the stop operational mechanism 7 of the engine emergency stop device 6, the intermediate connecting portion 7M includes the two kinds consisting of the first intermediate connecting portion 7m1 and the second intermediate connecting portion 7m2, the intermediate connecting portion 7M may alternatively be constituted of using the first intermediate connecting portion 7m1 alone.

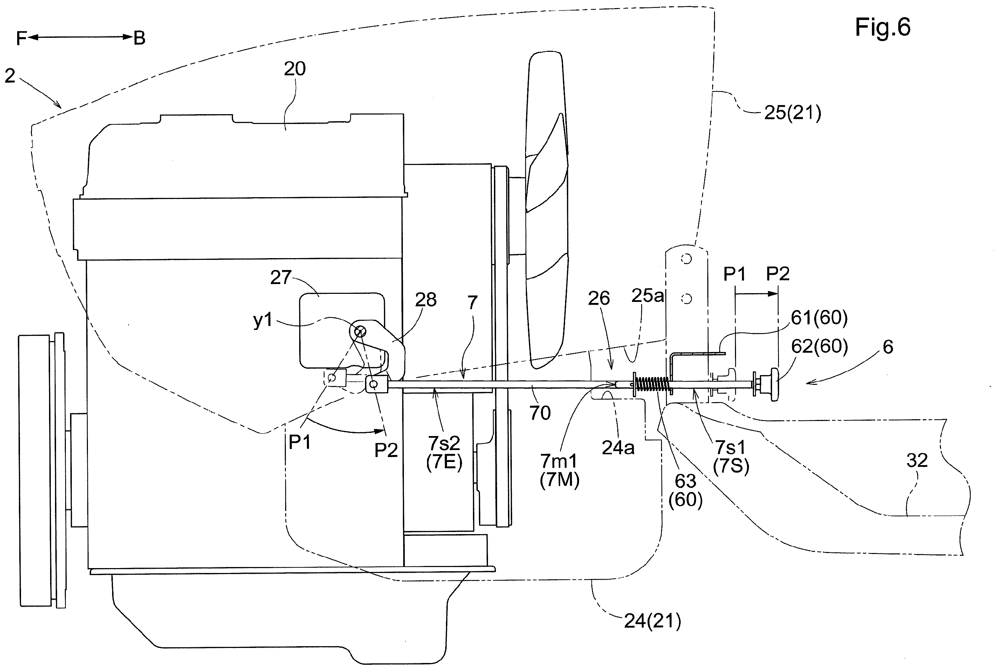

Namely, as shown in Fig. 6, in case the engine emergency stop device 6 is applied to an engine 20 having the stop lever 28 being provided at a lateral portion of the engine main body, an arrangement will be made as follows.

Firstly, the pivot link member 72 as the second intermediate connecting portion 7m2 and the second rod 71 as the terminal end operational portion 7E will be removed. Then, the front end portion of the second starting end operational portion 7s2 will be coupled to the lower end portion of the stop lever 28 and the stop operational mechanism 7 will be constituted of only the first rod 70 having the first intermediate connecting portion 7m1 between the first starting end operational portion 7s1 and the second starting end operational portion 7s2.

In this case, the first starting end operational portion 7s1 of the first rod 70 will be used as the starting end operational portion 7S along the operational direction of the operational knob 62 and the second starting end operational portion 7s2 of the first rod 70 coupled to the stop lever 28 will be used as the terminal end operational portion 7E. And, the intermediate connecting portion 7M having only the first intermediate connecting portion 7m1 will compensate for a positional error in the left/right direction between the starting end operational portion 7S and the terminal end operational portion 7E.

### [Further example 1]

In the foregoing example, which is not part of the invention, there was disclosed an exemplary arrangement in which as the intermediate connecting portion 7M, two kinds of intermediate connecting portions 7M consisting of the first intermediate connecting portion 7m1 and the second intermediate connecting portion 7m2 are employed in combination.

For instance, the intermediate connecting portion 7M may employ a plurality of first intermediate connecting portions 7m1 alone or a plurality of second intermediate connecting portions 7m2 alone or may employ three or more of the first intermediate connecting portions 7m1 and the second intermediate connecting portions 7m2 in any appropriate combination (namely, a combination of different kinds).

Even in the case of employing such combination arrangement of a same kind or different kinds as the intermediate connecting portion 7M as described above, the stop operational mechanism 7 may be constituted of an arrangement of using a part of such intermediate connecting portion 7M alone.

The rest of the arrangement may be same as that of the foregoing embodiment.

### [Further example 2]

In the foregoing example, which is not part of the invention, there was disclosed an exemplary arrangement in which the intermediate connecting portion 7M include one detachable from the starting end operational portion 7S or the terminal end operational portion 7E and one non-detachable from the starting end operational portion 7S.

For instance, the intermediate connecting portion 7M may be constituted of only one detachable from the starting end operational portion 7S or the terminal end operational portion 7E or of only one non-detachable from the starting end operational portion 7S or the terminal end operational portion 7E.

However, in the case of constituting the intermediate connecting portion 7M of only the non-detachable one, it is necessary to configure an engine employed to allow operation of the stop lever 28 without any trouble even in the presence of un-used intermediate connecting portion 7M.

### [Further example 3]

In the foregoing example, which is not part of the invention, there was disclosed an exemplary arrangement in which as the stop command operational tool 60, there is provided the operational knob 62 which can be pulled and this operational knob 62 is supported to the attachment bracket 61 fixed to the upper face front end portion of the step deck 32.

For instance, the attachment target portion may be provided at such a portion as the maneuvering panel 30 portion other than the step deck 32.

Further, instead of the operational knob 62, a pivotally operable operational lever or the like may be employed.

The rest of the arrangement may be same as that of the foregoing embodiment.

### Industrial Applicability

A work vehicle to which the inventive emergency stop device of a work vehicle may be applied is not limited to a riding mower disclosed in the embodiment, but may be a moving farming machine such as a tractor, a combine, etc. or various kinds of work vehicle such as a transporter vehicle.

## Claims

1. An engine emergency stop device (6) of a work vehicle comprising:
a stop lever (28) provided inside a hood (21) and switchable between an operational position for allowing an operation of the engine (20) and an operation stopping position for stopping an operation of the engine (20);
an operational device (29) configured to automatically operate the stop lever (28) to the operation stopping position in response to an operation of a key switch to an OFF position;
a stop command operational tool (60) provided separately of the key switch and outside the hood (21); and
a stop operational mechanism (7) configured to communicate a stop command by the stop command operational tool (60) to the stop lever (28) separately of the operational device (29);
wherein the stop operational mechanism (7) includes a starting end operational portion (7S) for transmitting an operational force along an operational direction of the stop command operational tool (60), a terminal end operational portion (7E) for transmitting the operational force of the stop command operational tool (60) along an operational direction of the stop lever (28) and an intermediate connecting portion (7M) connecting the starting end operational portion (7S) with the terminal end operational portion (7E); and
wherein the intermediate connecting portion (7M) is configured to compensate for a gap between the starting end operational portion (7S) and the terminal end operational portion (7E) in the operational direction or the operational position to operate the terminal end operational portion (7E) toward the engine stopping side in association with an operation of the starting end operational portion (7S) toward the engine stopping side;
**characterised in that** the stop operational mechanism (7) includes a first rod (70) as the starting end operational portion (7S), a second rod (71) as the terminal end portion (7E) and a pivot link member (72) connecting the first rod (70) with the second rod (71);
wherein one end portion of the first rod (70) is connected to an operational knob (62) of the stop command operational tool (60); and
wherein one end portion of the second rod (71) is connected to the stop lever (28); and
wherein the first rod (70) being bent in the form of a crank; and
wherein the intermediate connecting portion (7M) comprises a first intermediate connecting portion (7m1) and a second intermediate connecting portion (7m2);
wherein the first intermediate connecting portion (7m1) is provided in the bent portion bridging between a first starting end operational portion (7s1) and a second starting end operational portion (7s2) of the first rod (70); and
wherein the pivot link member (72) is forming the second intermediate connecting portion (7m2).

2. The engine emergency stop device (6) of a work vehicle of claim 1, wherein:
the hood (21) includes a lower hood (24) fixed to a machine body frame (10) and forming a lower space inside the hood (21) and an upper hood (25) forming an upper space inside the hood (21) and upwardly of the lower hood (24); and
between an upper edge (24a) of the lower hood (24) and a lower edge (25a) of the upper hood (25), there is formed an opening portion (26) at which a portion of the stop operational mechanism (7) extending from the outer side to the inner side of the hood (21) is located to allow movement of the starting end operational portion (7S) in its operational direction.

3. The engine emergency stop device (6) of a work vehicle of claim 2, wherein:
a step deck (32) is provided on the machine body frame (10);
at a front end portion on the step deck (32), the operational knob (62) as the stop command operational tool (60) is supported; and
the stop lever (28) is operable toward the engine stopping side by an operation of the operational knob (62) in a pulling direction.

4. The engine emergency stop device (6) of a work vehicle of claim 3, wherein:
a fender mirror (35) is attached to the front end portion of the step deck (32); and
the operational knob (62) is supported to an attachment metal tool (61) of the fender mirror (35).

## Patentansprüche

1. Motor-Notabschaltvorrichtung (6) eines Arbeitsfahrzeugs, umfassend:
einen Abschalthebel (28), der innerhalb einer Haube (21) bereitgestellt ist und zwischen einer Betriebsposition, um einen Betrieb des Motors (20) zu ermöglichen, und einer Betriebsabschaltposition, um einen Betrieb des Motors (20) abzuschalten, umschaltbar ist;
eine Betätigungsvorrichtung (29), die konfiguriert ist, um den Abschalthebel (28) als Reaktion auf eine Betätigung eines Schlüsselschalters in eine AUS-Stellung automatisch in die Betriebsabschaltposition zu betätigen;
ein Abschaltbefehl-Betätigungswerkzeug (60), das getrennt von dem Schlüsselschalter und außerhalb der Haube (21) bereitgestellt ist; und
einen Abschaltbetätigungsmechanismus (7), der konfiguriert ist, um einen Abschaltbefehl durch das Abschaltbefehl-Betätigungswerkzeug (60) getrennt von der Betätigungsvorrichtung (29) an den Abschalthebel (28) zu übermitteln;
wobei der Anschlagbetätigungsmechanismus (7) einen Anfangsendbetätigungsabschnitt (7S) zum Übertragen einer Betätigungskraft entlang einer Betätigungsrichtung des Abschaltbefehl-Betätigungswerkzeugs (60), einen Abschlussendbetätigungsabschnitt (7E) zum Übertragen der Betätigungskraft des Abschaltbefehl-Betätigungswerkzeugs (60) entlang einer Betätigungsrichtung des Anschlaghebels (28) und einen Zwischenverbindungsabschnitt (7M), der den Anfangsendbetätigungsabschnitt (7S) mit dem Endendbetätigungsabschnitt (7E) verbindet, beinhaltet; und
wobei der Zwischenverbindungsabschnitt (7M) konfiguriert ist, um einen Spalt zwischen dem Anfangsendbetätigungsabschnitt (7S) und dem Abschlussendbetätigungsabschnitt (7E) oder der Betriebsposition auszugleichen, um den Abschlussendbetätigungsabschnitt (7E) in Assoziation mit einer Betätigung des Anfangsendbetätigungsabschnitt (7S) in Richtung der Motorabschaltseite zu betätigen;
**dadurch gekennzeichnet, dass** der Abschaltbetätigungsmechanismus (7) eine erste Stange (70) als Anfangsendbetätigungsabschnitt (7S), eine zweite Stange (71) als Abschlussendabschnitt (7E) und ein Gelenkgliedelement (72), das die erste Stange (70) mit der zweiten Stange (71) verbindet, beinhaltet;
wobei ein Endabschnitt der ersten Stange (70) mit einem Betätigungsknopf (62) des Abschaltbefehl-Betätigungswerkzeugs (60) verbunden ist; und
wobei ein Endabschnitt der zweiten Stange (71) mit dem Abschalthebel (28) verbunden ist; und
wobei die erste Stange (70) in Form einer Kurbel gebogen ist; und
wobei der Zwischenverbindungsabschnitt (7M) einen ersten Zwischenverbindungsabschnitt (7m1) und einen zweiten Zwischenverbindungsabschnitt (7m2) umfasst;
wobei der erste Zwischenverbindungsabschnitt (7m1) in dem gebogenen Abschnitt bereitgestellt ist, der zwischen einem ersten Anfangsendbetätigungsabschnitt (7s1) und einem zweiten Anfangsendbetätigungsabschnitt (7s2) der ersten Stange (70) überbrückt; und
wobei das Gelenkverbindungselement (72) den zweiten Zwischenverbindungsabschnitt (7m2) bildet.

2. Motor-Notabschaltvorrichtung (6) eines Arbeitsfahrzeugs nach Anspruch 1, wobei:
die Haube (21) eine untere Haube (24), die an einem Maschinenkörperrahmen (10) befestigt ist und einen unteren Raum innerhalb der Haube (21) bildet, und eine obere Haube (25), die einen oberen Raum innerhalb der Haube (21) und oberhalb der unteren Haube (24) bildet, beinhaltet; und
zwischen einem oberen Rand (24a) der unteren Haube (24) und einem unteren Rand (25a) der oberen Haube (25) ein Öffnungsabschnitt (26) ausgebildet ist, an dem sich ein Abschnitt des Abschaltbetätigungsmechanismus (7) befindet, der sich von der Außenseite zu der Innenseite der Haube (21) erstreckt, um eine Bewegung des Anfangsendbetätigungsabschnitts (7S) in seiner Betätigungsrichtung zu ermöglichen.

3. Motor-Notabschaltvorrichtung (6) eines Arbeitsfahrzeugs nach Anspruch 2, wobei:
eine Trittfläche (32) an dem Maschinenkörperrahmen (10) bereitgestellt ist;
der Betätigungsknopf (62) an einem vorderen Endabschnitt auf der Trittfläche (32) als das Abschaltbefehl-Betätigungswerkzeug (60) gehalten wird; und
der Abschalthebel (28) durch eine Betätigung des Betätigungsknopfs (62) in einer Zugrichtung zu der Motorabschaltseite betätigbar ist.

4. Motor-Notabschaltvorrichtung (6) eines Arbeitsfahrzeugs nach Anspruch 3, wobei:
ein Kotflügelspiegel (35) an dem vorderen Endabschnitt der Trittfläche (32) angebracht ist; und
der Betätigungsknopf (62) an einem metallischen Befestigungswerkzeug (61) des Kotflügelspiegels (35) gehalten wird.

## Revendications

1. Dispositif d'arrêt d'urgence de moteur (6) d'un véhicule de travail comprenant :
un levier d'arrêt (28) prévu à l'intérieur d'un capot (21) et qui peut être basculé entre une position de fonctionnement destinée à permettre un fonctionnement du moteur (20) et une position d'arrêt destinée à arrêter un fonctionnement du moteur (20) ;
un dispositif opérationnel (29) configuré pour faire passer automatiquement le levier d'arrêt (28) en position d'arrêt en réponse au placement d'un interrupteur à clé dans une position OFF ;
un outil opérationnel de commande d'arrêt (60) prévu séparément de l'interrupteur à clé et à l'extérieur du capot (21) ; et
un mécanisme opérationnel d'arrêt (7) configuré pour communiquer une commande d'arrêt par l'outil opérationnel de commande d'arrêt (60) au levier d'arrêt (28) séparément du dispositif opérationnel (29) ;
dans lequel le mécanisme opérationnel d'arrêt (7) comprend une partie opérationnelle d'extrémité de démarrage (7S) destinée à transmettre une force opérationnelle le long d'une direction de fonctionnement de l'outil opérationnel de commande d'arrêt (60), une partie opérationnelle d'extrémité terminale (7E) destinée à transmettre la force opérationnelle de l'outil opérationnel de commande d'arrêt (60) le long d'une direction de fonctionnement du levier d'arrêt (28) et une partie de liaison intermédiaire (7M) qui relie la partie opérationnelle d'extrémité de démarrage (7S) à la partie opérationnelle d'extrémité terminale (7E) ; et
dans lequel la partie de liaison intermédiaire (7M) est configurée pour compenser un espace entre la partie opérationnelle d'extrémité de démarrage (7S) et la partie opérationnelle d'extrémité terminale (7E) dans la direction de fonctionnement ou la position de fonctionnement afin de faire fonctionner la partie opérationnelle d'extrémité terminale (7E) vers le côté d'arrêt du moteur en association avec un fonctionnement de la partie opérationnelle d'extrémité de démarrage (7S) vers le côté d'arrêt du moteur ;
**caractérisé en ce que** le mécanisme opérationnel d'arrêt (7) comprend une première tige (70) en guise de partie opérationnelle d'extrémité de démarrage (7S), une deuxième tige (71) en guise de partie d'extrémité terminale (7E) et un élément de liaison pivotante (72) qui relie la première tige (70) à la deuxième tige (71) ;
dans lequel une partie d'extrémité de la première tige (70) est reliée à un bouton de fonctionnement (62) de l'outil opérationnel de commande d'arrêt (60) ; et
dans lequel une partie d'extrémité de la deuxième tige (71) est reliée au levier d'arrêt (28) ; et
dans lequel la première tige (70) est cintrée sous la forme d'une manivelle ; et
dans lequel la partie de liaison intermédiaire (7M) comprend une première partie de liaison intermédiaire (7m1) et une deuxième partie de liaison intermédiaire (7m2) ;
dans lequel la première partie de liaison intermédiaire (7m1) est prévue dans la partie cintrée qui assure la liaison entre une première partie opérationnelle d'extrémité de démarrage (7s1) et une deuxième partie opérationnelle d'extrémité de démarrage (7s2) de la première tige (70) ; et
dans lequel l'élément de liaison pivotante (72) forme la deuxième partie de liaison intermédiaire (7m2).

2. Dispositif d'arrêt d'urgence de moteur (6) d'un véhicule de travail selon la revendication 1, dans lequel :
le capot (21) comprend un capot inférieur (24) fixé sur un châssis de machine (10) et formant un espace inférieur à l'intérieur du capot (21) et un capot supérieur (25) formant un espace supérieur à l'intérieur du capot (21) et vers le haut par rapport au capot inférieur (24) ; et
entre un bord supérieur (24a) du capot inférieur (24) et un bord inférieur (25a) du capot supérieur (25) est formée une partie d'ouverture (26) au niveau de laquelle une partie du mécanisme opérationnel d'arrêt (7) s'étendant du côté externe vers le côté interne du capot (21) se trouve afin de permettre le déplacement de la partie opérationnelle d'extrémité de démarrage (7S) dans sa direction de fonctionnement.

3. Dispositif d'arrêt d'urgence de moteur (6) d'un véhicule de travail selon la revendication 2, dans lequel :
un marchepied (32) est prévu sur le châssis de machine (10) ;
au niveau d'une partie d'extrémité avant sur le marchepied (32), le bouton de fonctionnement (62) en guise d'outil opérationnel de commande d'arrêt (60) est supporté ; et
le levier d'arrêt (28) peut être déplacé vers le côté d'arrêt du moteur en plaçant le bouton de fonctionnement (62) dans une direction de traction.

4. Dispositif d'arrêt d'urgence de moteur (6) d'un véhicule de travail selon la revendication 3, dans lequel :
un rétroviseur d'aile (35) est fixé sur la partie d'extrémité avant du marchepied (32) ; et
le bouton de fonctionnement (62) est supporté sur un outil métallique de fixation (61) du rétroviseur d'aile (35).
